# EUROPEAN PATENT SPECIFICATION

(11) **EP 3 951 522 B1**
(45) Date of publication and mention of the grant of the patent: **19.02.2025**
(21) Application number: 19921530.2
(22) Date of filing: 28.03.2019
(51) Int. Cl.: G06Q 10/08

(54) **COMPONENTS MANAGEMENT SYSTEM**
KOMPONENTENVERWALTUNGSSYSTEM
SYSTÈME DE GESTION DE COMPOSANTS

(43) Date of publication of application: 09.02.2022
(73) Proprietor: Fuji Corporation, Chiryu-shi, Aichi 472-8686 (JP)
(72) Inventor: MURAOKA, Hiroo, Chiryu-shi, Aichi 472-8686 (JP); KATO, Hisataka, Chiryu-shi, Aichi 472-8686 (JP); KONDO, Masuki, Chiryu-shi, Aichi 472-8686 (JP); HAYASAKI, Koji, Chiryu-shi, Aichi 472-8686 (JP)
(74) Representative: Grünecker Patent- und Rechtsanwälte PartG mbB
(86) International application number: PCT/JP2019/013573
(87) International publication number: WO 2020/194657

(56) References cited:
- JP-A- 2002 117 297
- JP-A- 2004 334 653
- JP-A- 2005 250 602
- JP-A- 2018 147 038
- JP-A- H0 728 910

## Description

### Technical Field

The present specification discloses a components management system.

### Background Art

Conventionally, a management system that manages an article such as components used in production by a production device has been proposed (refer to Patent Literature 1, for example). The management system selects an article moving from a starting point to a destination point as a delivery target to be delivered from the destination point to the delivery point and create a delivery plan, and when the article arrives at the destination point, the management system outputs an instruction to deliver the article to the delivery point based on the delivery plan. In addition, the management system distinguishes and manages a newly purchased general-purpose article and a deposited article that is inspected after use by inspection processing, and, in a case where the deposited article is a movement classification that indicates the deposited article is moving from the storage location to the delivery point such as a production line, the inspection processing of the deposited article can be performed by changing the value of the deposit use flag.

### Patent Literature

Patent Literature 1: WO 2011/092839.

Document JP 2005 250602 A relates to production control and individually performing the information management of articles such as furniture.

### Summary of the Invention

### Technical Problem

Incidentally, there would be a case where a product produced by a production device using a supplied article, which is a component supplied from a customer, is shipped to the customer. In this case, since the produced product is an asset of a company that owns a production device, the management system needs to manage the supplied article as an asset. However, since a production plan may be changed for the convenience of the customer, depending on the timing of appropriating asset, there may be a problem such as an increase in asset inventory due to stay for a long period of time of the supplied article on the asset.

The present disclosure is directed to a main object of performing an asset management of the supplied article more appropriately when producing using a supplied article supplied from a customer.

### Solution to Problem

The present disclosure has taken following means to achieve the main object described above.

A gist of a components management system of the present disclosure is that the components management system, which manages components used in production of a product by a production device, includes: a reception section configured to, in a case where a supplied article supplied from a customer of the product is received as the component, perform reception processing of registering information on a storage location at which the supplied article is stored for each handling unit in association with component information; and a supplied article appropriating section configured to appropriate a price of the supplied article as an asset at a predetermined timing after the supplied article is unloaded from the storage location for use in the production by the production device.

The components management system of the present disclosure performs, when the supplied article supplied from a customer is received, reception processing in which component information is registered in association with information of the storage location stored for each handling unit for the supplied article. In addition, a price of the supplied article is appropriated as an asset at a predetermined timing after the supplied article is unloaded from the storage location for use in production. As a result, since a price of the supplied article can be appropriated as an asset after the supplied article is used in production while appropriately managing the information of the storage location of the supplied article, it is possible to suppress the supplied article from staying for a long period of time on the asset. In addition, in a case where the supplied article returns to the customer without being unloaded from the storage location for the convenience of the customer or the like, since it is before the supplied article is appropriated as an asset, efforts for correcting the information of the asset can be omitted. Accordingly, in a case where the supplied article is used for production, the asset management of the supplied article can be performed more appropriately.

### Brief Description of Drawings

Fig. 1 is an explanatory view illustrating an example of manufacturing company 10 including components management system 18.
Fig. 2 is an explanatory view illustrating an example of the configurations of components management system 18 and mounting system 40.
Fig. 3 is an explanatory view illustrating an example of inventory information 23.
Fig. 4 is an explanatory view illustrating an example of asset information 24.
Fig. 5 is a flowchart illustrating an example of reel reception processing.
Fig. 6 is a flowchart illustrating an example of supplied article appropriation processing.
Fig. 7 is a flowchart illustrating supplied article appropriation processing of a modification example.
Fig. 8 is a flowchart illustrating supplied article appropriation processing of a modification example.
Fig. 9 is a flowchart illustrating supplied article appropriation processing of a modification example.
Fig. 10 is an explanatory view illustrating a difference in timings of appropriating asset.
Fig. 11 is a flowchart illustrating an example of appropriating timing setting processing.

### Description of Embodiments

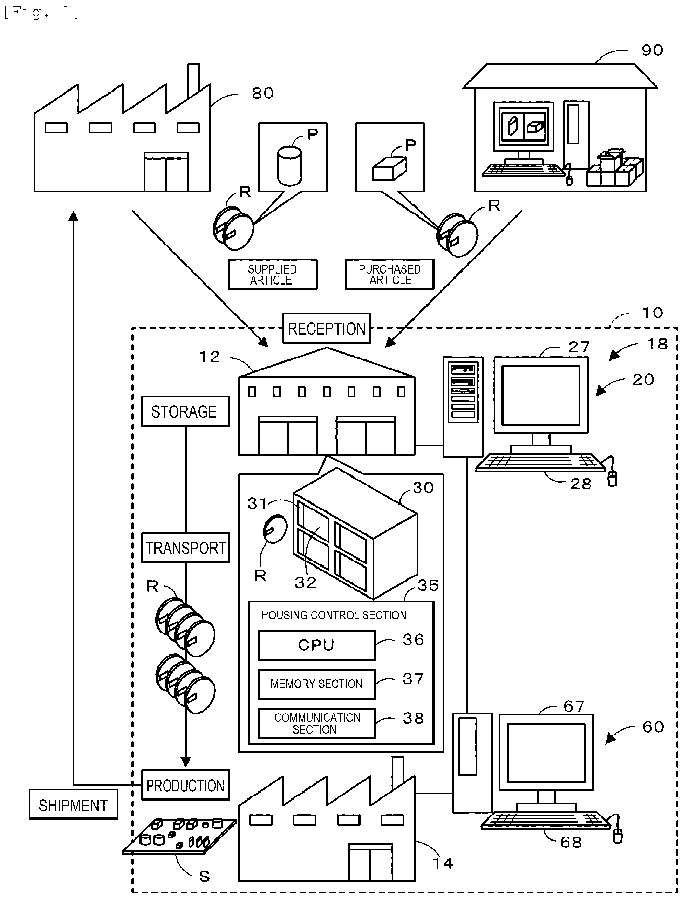

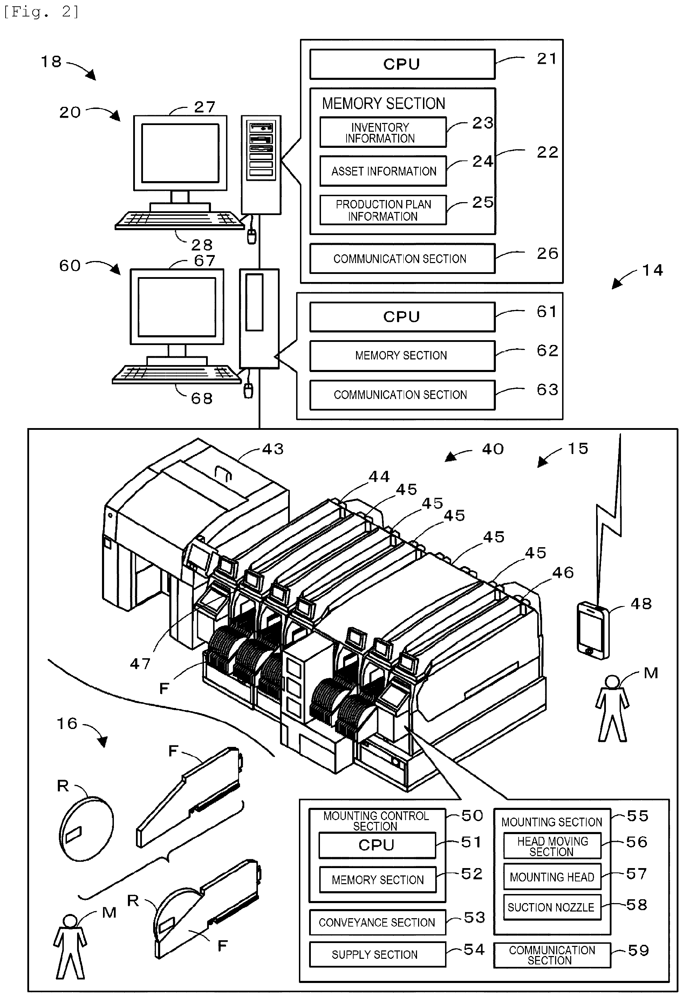

Next, embodiments of the present disclosure will be described with reference to the accompanying drawings. Fig. 1 is an explanatory view illustrating an example of manufacturing company 10 including components management system 18, and Fig. 2 is an explanatory view illustrating an example of the configurations of components management system 18 and mounting system 40. Manufacturing company 10 includes warehouse 12, factory 14, integration management device 20, and production management device 60. Warehouse 12 stores various component P, substrate S, and the like. In factory 14, mounting system 40 or the like for mounting component P on substrate S is disposed. Integration management device 20 is a computer that integrally performs an inventory management of warehouse 12, an order management of necessary component P or the like, a reception management of component P or the like, a management of a production plan of factory 14, a management of company assets, and the like. Production management device 60 is a computer that manages productions of mounting system 40 and manages preparations for production in accordance with the production plan. In the present embodiment, integration management device 20 and production management device 60 configure components management system 18. Components management system 18 distinguishes between the supplied article supplied from customer's factory 80 and the like and the purchased article purchased from shop 90 and the like, and manages them as components P. Manufacturing company 10 produces substrate S on which the supplied article supplied from a customer or the purchased article is mounted, and ships and delivers substrate S to the customer, or produces substrate S on which the purchased article is mounted, and ships and delivers substrate S to other customers.

Warehouse 12 includes housing device 30 that houses such as reel R (accommodation member) on which a tape that accommodates component P is wound, housing control section 35 that performs housing control of housing device 30, and the like. Housing device 30 includes gate 31 serving as an inlet and an outlet of reel R, operation panel 32 that performs various inputs and displays, and the like, and is configured as an automatic warehouse that automatically takes in and takes out reel R. Housing device 30 may store the tape in a state where it is unloaded from reel R. Housing control section 35 is configured as a microprocessor centered on CPU 36, and includes memory section 37 that stores various data, and communication section 38 that performs communication. The reception of reel R in warehouse 12 is performed by operator M (refer to Fig. 2). Operator M possesses portable terminal 48 illustrated in Fig. 2, and can read identification information (ID label) such as a barcode or a two-dimensional code attached to reel R by portable terminal 48. Portable terminal 48 can exchange information with communication section 38 or the like of Housing control section 35, and transmits the component information of component P accommodated in received reel R to Housing control section 35.

Factory 14 includes production area 15 in which mounting system 40 is disposed, and preparation area 16 in which an operator performs a production preparation. Mounting system 40 includes printing device 43, print inspection device 44, mounting device 45, mount inspection device 46, a reflow device and reflow inspection device (not illustrated), a substrate conveyance device, and the like.

Mounting device 45 includes mounting control section 50, conveyance section 53, supply section 54, mounting section 55, communication section 59, and operation panel 47. Mounting control section 50 is configured as a microprocessor centered on CPU 51, and includes memory section 52 that stores various data. Mounting control section 50 exchanges information with conveyance section 53, supply section 54, mounting section 55, and communication section 59, and controls them. Conveyance section 53 is a unit that conveys and fixes substrate S. Supply section 54 is a unit that supplies component P to mounting section 55. Supply section 54 has, for example, a slot that mounts feeder F to which reel R is attached. Supply section 54 also has a tray unit or the like that accommodates a tray on which component P is placed. Mounting section 55 is a unit that picks up component P from supply section 54, and mounts component P on substrate S fixed to conveyance section 53. Mounting section 55 includes head moving section 56, mounting head 57, and suction nozzle 58. Head moving section 56 includes a slider that moves in an XY-direction guided by the guide rail, and a motor that drives the slider. Mounting head 57 is detachably mounted on the slider, and is moved in the XY-direction by head moving section 56. One or more suction nozzles 58 are detachably mounted on a lower surface of mounting head 57. Suction nozzle 58 picks up component P using a negative pressure. The pickup of component P may be performed by a mechanical chuck or the like that mechanically holds component P in addition to suction nozzle 58. Communication section 59 exchanges information with other devices. Operation panel 47 includes a display section serving as a display section that displays a screen, and an operation section that accepts an input from operator M.

In preparation area 16, operator M assembles, before the production of substrate S is started, reel R unloaded from housing device 30 of warehouse 12 and transported to factory 14 to feeder F, and performs the operation of mounting reel R to the slot of mounting device 45 predetermined in advance. In addition, portable terminal 48 possessed by operator M can communicate with mounting device 45, production management device 60, and the like, and transmits the information on reel R transported from warehouse 12 to mounting device 45, production management device 60, and the like. Feeder F may store identification information of assembled reel R.

Production management device 60 is configured as a microprocessor centered on CPU 61, and includes memory section 62 that stores various data, communication section 63 that performs communication, display section 67 that displays various information, and input section 68 such as a mouse and a keyboard that input various instructions. Production management device 60 exchanges information with each device of mounting system 40, portable terminal 48, integration management device 20, and the like via communication section 63.

Integration management device 20 is configured as a microprocessor centered on CPU 21, and includes memory section 22 that stores various data, communication section 26 that performs communication, display section 27 that displays various information, and input section 28 such as a mouse and a keyboard that input various instructions. Integration management device 20 exchanges information with Housing control section 35, production management device 60, and the like via communication section 26. In addition, integration management device 20 can exchange information with customer's factory 80, shop 90, and the like, and exchanges, for example, information on a production adjustment with the customer, order information of component P, delivery schedule information of component P, and the like.

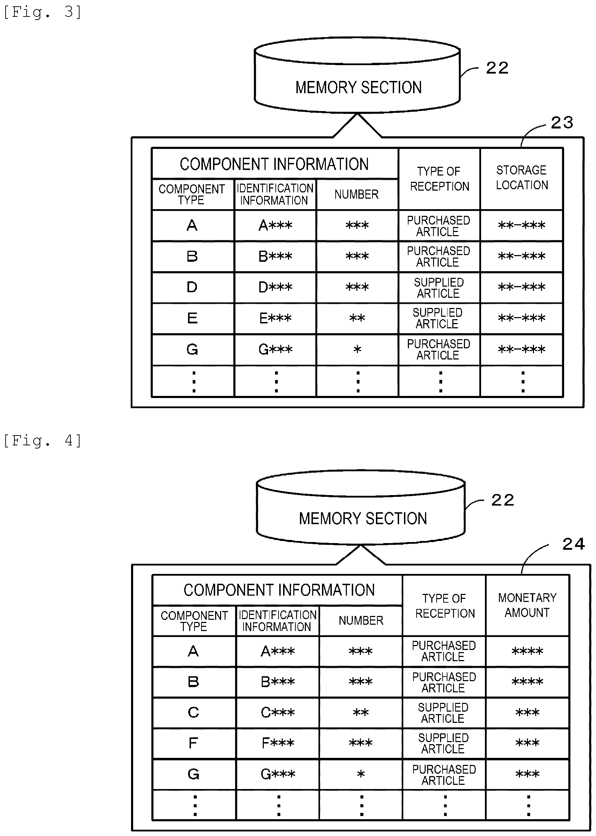

Memory section 22 of integration management device 20 stores inventory information 23 of component P and the like in warehouse 12, asset information 24 of manufacturing company 10, production plan information 25 of mounting system 40, and the like. In inventory information 23 in Fig. 3, component information such as a component type of component P accommodated in reel R, identification information of reel R, and the number of components, information on whether a reception type of component P is a purchased article or a supplied article, and a storage location in warehouse 12 (housing device 30) are registered in association with each other. In addition, in asset information 24 in Fig. 4, the component information and the reception type information that are the same as inventory information 23 and a price of appropriated component P are registered in association with each other. In the present embodiment, as a price of component P, a price in unit of reel R that accommodates component P, that is, a price based on the unit price of component P and the number of components accommodated in reel R is registered. For convenience of explanation, inventory information 23 and asset information 24 include the reception type of component P, but are not limited to this, and need not to include the reception type. Although not illustrated, production plan information 25 includes information such as which reel R (feeder F) of which component type is set in which slot of which device, and the like, based on the component type, based on the component type and the number of components required for the production of substrate S performed in mounting system 40 within a predetermined period. The production planned in this production plan information 25 may be changed in order, stopped or postponed depending on the convenience of the customer of the supplier of the supplied article. In addition to such information, components management system 18 may manage information on the current state of reel R, the remaining number of component P, and the like. The current state of reel R includes a state transported from warehouse 12 to factory 14, a state before being assembled to feeder F in factory 14, a state before being assembled to feeder F and set to mounting device 45, a state set to mounting device 45, and the like.

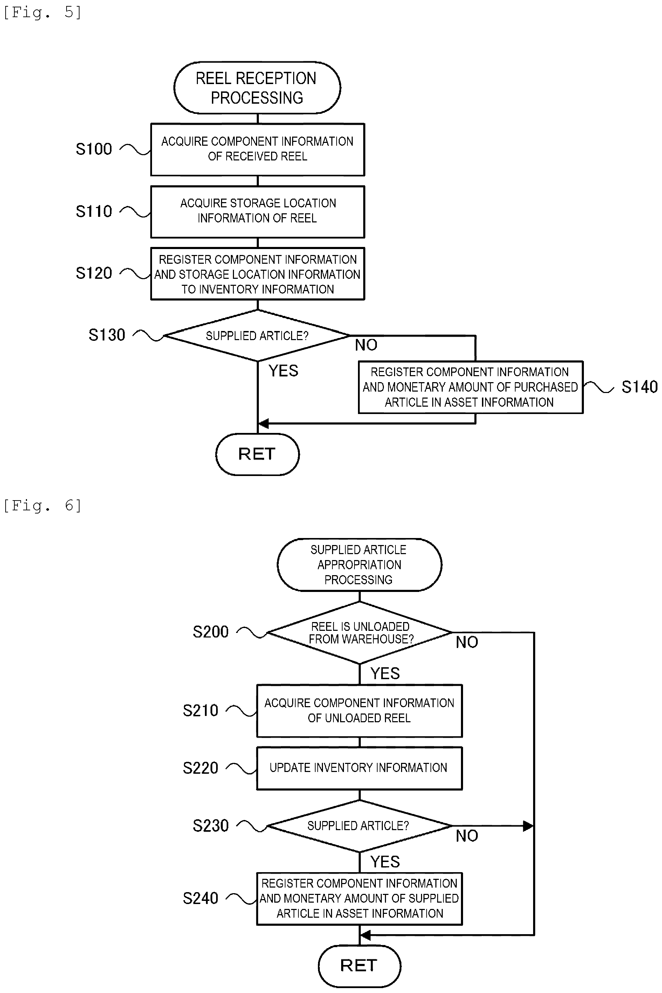

The following is a description of the operation of components management system 18 configured in this manner. Fig. 5 is a flowchart illustrating an example of reel reception processing. This processing is executed by CPU 21 of integration management device 20 when reel R that accommodates component P is received in warehouse 12, that is, when reel R is arrived. First, CPU 21 acquires component information of component P in received reel R (S100), and acquires storage location information of reel R (S110). As described above, since component information of component P read by portable terminal 48 is transmitted to Housing control section 35, CPU 21 can obtain the component information of component P by communication with Housing control section 35. In addition, CPU 21 acquires the storage location information of reel R by communication with Housing control section 35. Next, CPU 21 registers the component information and the storage location information in inventory information 23 in association with each other (S120), and determines whether received component P is a supplied article (S130). When it is determined that component P is not a supplied article but a purchased article, CPU 21 registers component information, information of the purchased article, and a price of the purchased article (component P) in asset information 24 (S140), and terminates the reel reception processing. In the present embodiment, a price in unit of reel R is appropriated as a price of the purchased article. On the other hand, when component P is determined as a supplied article in S130, CPU 21 terminates the reel reception processing as it is. That is, CPU 21 does not register the supplied article in asset information 24 at a timing of reception. Therefore, at a timing when the supplied article is received, a price of the supplied article is not appropriated. The appropriation of the supplied article is performed by the following supplied article appropriation processing.

Fig. 6 is a flowchart illustrating an example of supplied article appropriation processing. This processing is executed by CPU 21 of integration management device 20. First, CPU 21 determines whether reel R is unloaded from housing device 30 of warehouse 12 by communication with housing control section 35 (S200), and, when CPU 21 determines that reel R is not unloaded, CPU 21 terminates the supplied article appropriation processing as it is. On the other hand, when it is determined that reel R is unloaded, CPU 21 acquires the component information of unloaded reel R (S210), and updates inventory information 23 by deleting the information of unloaded reel R (S220). Next, CPU 21 determines whether component P of unloaded reel R is a supplied article (S230), and terminates the supplied article appropriation processing when it is determined that component P is not a supplied article but a purchased article. In addition, when it is determined that component P of unloaded reel R is a supplied article, CPU 21 registers component information, flag information of the supplied article, and a price of the supplied article (component P) in asset information 24 (S240), and terminates the supplied article appropriation processing. CPU 21 appropriates a price in unit of reel R as a price of the supplied article.

As described above, the purchased article is appropriated as an asset at a timing when it is received in warehouse 12, and the supplied article is appropriated as an asset at a timing when it is unloaded from housing device 30 of warehouse 12. Accordingly, for example, as illustrated in Figs. 3 and 4, the purchased articles of component types A, B and G are those whose storage location information is registered in inventory information 23 and are appropriated in asset information 24. On the other hand, the supplied articles of component types D and E are those whose storage location information is registered in inventory information 23 but are not appropriated in asset information 24. In addition, since the supplied articles of component types C and F appropriated in asset information 24 at a timing when they are unloaded from housing device 30 of warehouse 12 are already unloaded from housing device 30, they are not registered in inventory information 23.

Here, the correspondence relationship between the configuration elements of the present embodiment and the configuration elements of the present invention will be clarified. Components management system 18 of the present embodiment corresponds to the components management system of the present disclosure, CPU 21 of integration management device 20 that performs S100 to S120 (reception processing) of the reel reception processing in Fig. 5 corresponds to the reception section, and CPU 21 of integration management device 20 that performs the supplied article appropriation processing in Fig. 6 corresponds to the supplied article appropriating section. In addition, CPU 21 of integration management device 20 that performs S150 of the reel reception processing corresponds to the purchased article appropriating section. Mounting device 45 corresponds to the production device, and reel R corresponds to the handling unit of component.

In components management system 18 described above, when the supplied article supplied from a customer is received, the component information is registered in inventory information 23 in associated with the information of the storage location of reel R that accommodates the supplied article. In addition, a price of the supplied article is appropriated in asset information 24 at a timing when reel R is unloaded from a storage location such as housing device 30. Accordingly, even in a case where the supplied article stays in warehouse 12 for a long period of time due to the production convenience of the customer or the like, it is possible to prevent the supplied article from staying for a long period of time on the asset and suppress an increase in asset inventory. In addition, even in a case where the supplied article is returned to the customer without being used due to the production convenience of the customer or the like, it is possible to save efforts for correcting asset information 24.

In addition, since a price of the supplied article is appropriated in unit of reel R in components management system 18, it is possible to appropriate the price by simple processing. In addition, in components management system 18, when the purchased article purchased from shop 90 or the like is received, a price of the purchased article is appropriated in asset information 24 in unit of reel R at a timing when the purchased article is registered in inventory information 23. Here, since the production plan is rarely changed or returned by external factors unlike supplied articles, it is desirable that the purchased article is appropriated as an asset at a timing of reception. Accordingly, components management system 18 can appropriate assets at an appropriate timing corresponding to each of the purchased article and the supplied article.

The present disclosure is not limited in any way to the embodiment described above, and it is needless to say that the embodiment may be implemented in various aspects as long as it falls within a technical scope of the present disclosure.

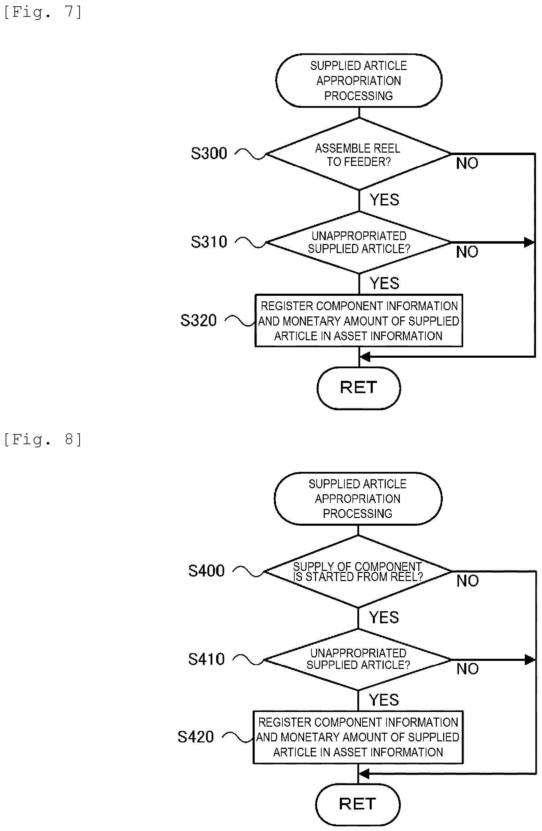

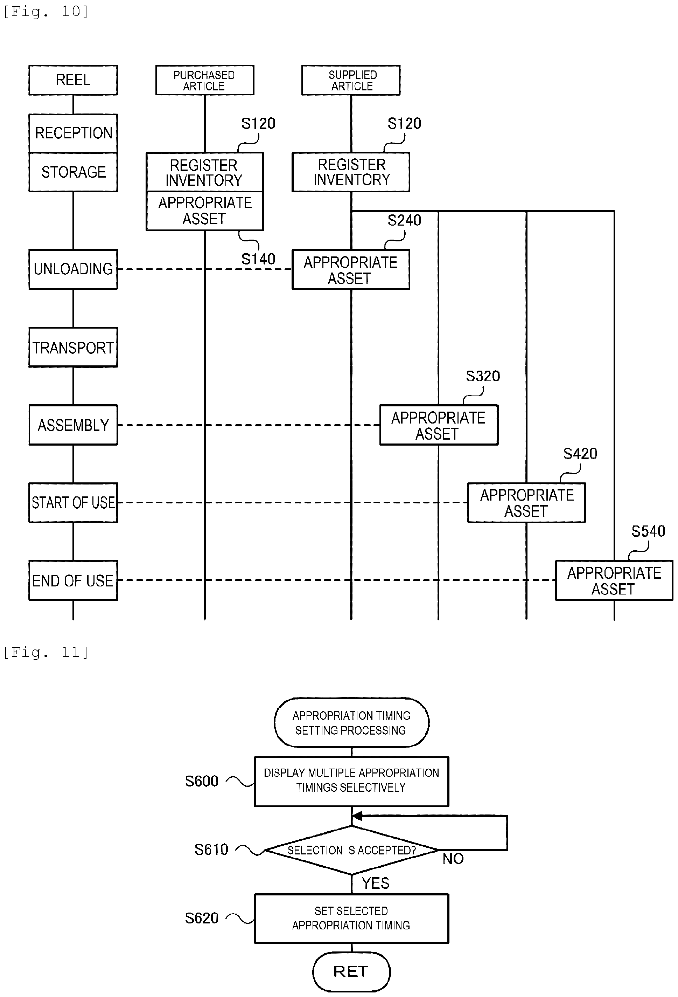

For example, in the above embodiment, a supplied article is appropriated as an asset at a timing when reel R is unloaded from the storage location such as housing device 30, but the present invention is not limited thereto. That is, the supplied article may be appropriated as an asset at a timing after reel R is unloaded from the storage location in order to be used in production. In addition, if the supplied article is appropriated as an asset at such timing, a appropriation timing of the purchased article need not be limited to a reception timing of the purchased article. Figs. 7 to 9 are flowcharts illustrating supplied article appropriation processing of a modification example. These kinds of processing are performed by integration management device 20 while communicating with production management device 60, and are performed in place of the supplied article appropriation processing in Fig. 6. Fig. 10 is an explanatory view illustrating the difference in timings of appropriating asset, and each step number corresponds to a step number of the reel reception processing or the supplied article appropriation processing. In Fig. 10, it is indicated that the purchased article is registered in inventory information 23 (S120) and appropriated in asset information 24 (S140) when received reel R is stored. In addition, it is indicated that the supplied article of the embodiment is registered in inventory information 23 when received reel R is stored (S120), and is appropriated in asset information 24 when reel R is unloaded (S240). Hereinafter, each of the processes illustrated in Figs. 7 to 9 will be described in order.

In supplied article appropriation processing in Fig. 7, CPU 21 of integration management device 20 first determines whether reel R transported to factory 14 is assembled to feeder F by operator M (S300). When operator M performs an external setup work such as assembling reel R to feeder F in preparation area 16, the information of reel R is read by portable terminal 48 and transmitted to production management device 60. Therefore, CPU 21 of integration management device 20 can perform the determination of S300 by communication with production management device 60. When it is determined that reel R is not assembled to feeder F, CPU 21 terminates the supplied article appropriation processing as it is. On the other hand, when it is determined that reel R is assembled to feeder F, CPU 21 determines whether component P in reel R is an unappropriated supplied article (S310), and, when it is determined that component P is not a supplied article but a purchased article or that component P is already appropriated, CPU 21 terminates the supplied article appropriation processing. Since reel R of the supplied article once appropriated as an asset may be reassembled after being disassembled from feeder F, CPU 21 determines whether component P is an unappropriated supplied article in S310. When it is determined that component P is an unappropriated supplied article, CPU 21 registers component information, information of the supplied article, and a price of the supplied article (component P) in unit of reel R in asset information 24 (S320), and terminates the supplied article appropriation processing. That is, in this modification example, when reel R that accommodates the supplied article is assembled to feeder F, the supplied article is appropriated as an asset (refer to Fig. 10). Even after the supplied article is unloaded from warehouse 12, the production may be stopped or postponed for the convenience of the customer, for example, during transportation. In this modification example, CPU 21 appropriates assets at a timing when preparations for operations are made, which is closer to the start of production than when the supplied article is received or unloaded from warehouse 12. As a result, CPU 21 can appropriate the supplied article as an asset at a timing when the supplied article is more likely to be used in production and less likely to stay for a long period of time in asset information 24. Accordingly, components management system 18 can more appropriately perform the asset management of the supplied article.

In supplied article appropriation processing in Fig. 8, CPU 21 of integration management device 20 first determines whether the supply of component P is started from reel R assembled to feeder F and set in mounting device 45 (S400). In this modification example, when the supply of the component is started from reel R set in mounting device 45, production management device 60 notifies integration management device 20 of the information. Therefore, CPU 21 of integration management device 20 can perform the determination of S400 by communication with production management device 60. When it is determined that the supply of component P is not started from reel R set in mounting device 45, CPU 21 terminates the supplied article appropriation processing as it is. On the other hand, when it is determined that the supply of component P is started from reel R set in mounting device 45, CPU 21 determines whether component P in reel R is an unappropriated supplied article (S410), and, when it is determined that component P is not an unappropriated supplied article, terminates the supplied article appropriation processing. When it is determined that component P is an unappropriated supplied article in step S410, CPU 21 registers component information, information of the supplied article, and a price of the supplied article (component P) in unit of reel R in asset information 24 (S420), and terminates the supplied article appropriation processing. That is, in this modification example, when the supply of component P (use of reel R) is started from reel R that accommodates the supplied article, the supplied article is appropriated as an asset (refer to Fig. 10). Therefore, since the asset is appropriated at a timing when it is determined that the supplied article is used, it is possible to prevent the supplied article from staying for a long period of time in asset information 24. Accordingly, components management system 18 can more appropriately perform the asset management of the supplied article.

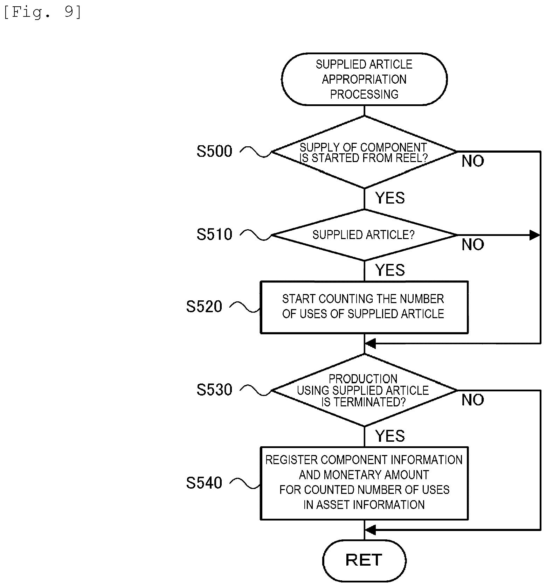

In supplied article appropriation processing in Fig. 9, CPU 21 of integration management device 20 first determines that the supply of component P is started from reel R set in mounting device 45 and whether component P of reel R is a supplied article (S500, S510). When a negative determination is made in any of S500 and S510, CPU 21 proceeds to S530. When a positive determination is made in steps S500 and S510, CPU 21 starts counting the number of uses of the supplied article supplied from reel R (S520). When the counting is started, CPU 21 counts up the number of uses each time the supplied article is supplied from reel R during the production. The counting of the number of uses of the supplied article may be performed by CPU 51 of mounting control section 50 or CPU 61 of production management device 60, and the counter value may be transmitted to CPU 21 by communication. Then, CPU 21 determines whether the production using the supplied article is terminated (S530), and terminates the supplied article appropriation processing when it is determined that the production using the supplied article is not terminated. On the other hand, when it is determined that the production using the supplied article is terminated, CPU 21 registers component information, information of the supplied article, and a price for the counted number of uses of the supplied article in asset information 24 (S540), and terminates the supplied article appropriation processing. In this modification example, CPU 21 appropriates the supplied article as an asset when the production using reel R is terminated (refer to Fig. 10). Therefore, since CPU 21 can appropriate an asset at a timing when the supplied article is surely used, and further appropriate a price of the supplied article for the number of uses, it is possible to reflect an accurate price in asset information 24. Accordingly, components management system 18 can more appropriately perform the asset management of the supplied article. In this modification example, as same in the embodiment and other modification examples, CPU 21 may appropriate a price of the supplied article as an asset not by a price of the supplied article for the number of uses but by a price in unit of reel R.

In the above embodiment and modification examples, the following four timings are exemplified as the appropriation timings for appropriating the supplied article as an asset. That is, the following four timings are exemplified: a first timing at which reel R is unloaded from housing device 30, a second timing at which reel R is assembled to feeder F, a third timing at which reel R is started to be used in production by mounting device 45, and a fourth timing at which the production in which reel R is used is terminated. In components management system 18, any of these four timings may be set in advance, or may be set by the timing selected by a user.

Fig. 11 is a flowchart illustrating an example of appropriation timing setting processing. This processing is executed by CPU 21 when a selection setting of the appropriation timing is requested from a user via display section 27 and input section 28 of integration management device 20. In appropriation timing setting processing, first, CPU 21 displays a appropriation timing selection screen (not illustrated) capable of selecting multiple of appropriation timings on display section 27 (S600), and waits for the selection by a user to be accepted (S610). On the appropriation timing selection screen, for example, two or more appropriation timings such as the first to fourth timings described above may be selectably displayed, and other appropriation timings may be selectable. Then, when it is determined that the selection is accepted by a user, CPU 21 sets the selected appropriation timing (S620), and terminates the appropriation timing setting processing. As described above, since the asset appropriation of the supplied article can be appropriately performed at the appropriation timing selected by a user, the asset management can be performed more appropriately.

Such appropriation timing may be set the same timing for all supplied article, may be set for each customer, may be set for each component type of the supplied article, or may be set for each supplied article when the supplied article is received.

In the above embodiment, the components management system 18 is configured by the integration management device 20 and the production management device 60, but the present invention is not limited to this, and the components management system 18 may be configured by only the integration management device 20. In addition, although integration management device 20 is described as performing the appropriation of the supplied article, the present invention is not limited to this, and production management device 60 may perform the appropriation of the supplied article. For example, when the supplied article is appropriated at any of the second to fourth timings described above, production management device 60 may perform the appropriation. In addition, in such a case, asset information 24 is not limited to that stored in memory section 22 of integration management device 20, and may be stored in a data server or the like that can be accessed by both integration management device 20 and production management device 60. In addition, integration management device 20 and production management device 60 are not limited to being separate management devices, and may be a single management device. The management device of inventory information 23 and the management device of asset information 24 may be configured as separate management devices.

In the above embodiment, appropriating the purchased article and the supplied article as assets is performed in unit of reel R, but the present invention is not limited to this, and may be performed in unit of component P. The supplied article is not limited to component P supplied from reel R, but may be component P supplied by being placed on a tray or the like.

Here, the components management system of the present disclosure may be configured as follows. In the components management system of the present disclosure, the predetermined timing is either the timing when the supplied article is unloaded from the storage location or the timing when the supplied article unloaded from the storage location is prepared to be used in production by the production device, and the supplied article appropriating section may appropriate a price of the supplied article for each handling unit. At either timing, since the supplied article is more likely to be used in production than at a timing of reception and the supplied article appropriated as an asset is less likely to stay, the asset management can be performed more appropriately. In addition, a price of the supplied article can be appropriated for each handling unit by a simple processing.

In the components management system of the present disclosure, the predetermined timing is a timing when the supplied article unloaded from the storage location is started to be used in production by the production device or a timing when the production is terminated, and the supplied article appropriating section may appropriate a price of the supplied article for each handling unit. As a result, the asset management can be performed more appropriately by surely preventing stay of the supplied article appropriated as an asset. In addition, a price of the supplied article can be appropriated for each handling unit by a simple processing.

In the components management system of the present disclosure, the predetermined timing is a timing at which the supplied article unloaded from the storage location is used in production by the production device to terminate the production, and the supplied article appropriating section may count the number of uses of the supplied article used in production by the production device, and may appropriate a price of the supplied article for the counted number of uses as an asset. As a result, since the number of uses of the supplied article and the number of supplied articles appropriated as assets can be matched with each other, the asset management can be performed more appropriately.

The components management system of the present disclosure may include a setting section that sets a timing selected by a user among multiple timings after the supplied article is unloaded from the storage location, to the predetermined timing. Accordingly, since the asset appropriation of the component can be performed appropriately at a predetermined timing selected by a user, the asset management can be performed more appropriately. Here, multiple timings may be at least two of a first timing at which the supplied article is unloaded from the storage location, a second timing at which the supplied article is prepared to be used in production by the production device, a third timing at which the supplied article is started to be used in production by the production device, and a fourth timing at which the supplied article is used in production by the production device and the production is terminated.

In the components management system of the present disclosure, the reception section configured to, in a case where the purchased article purchased from a seller is received as the component, perform the reception processing on the purchased article, and the components management system may further includes a purchased article appropriating section configured to appropriate a price of the purchased article as an asset for each handling unit at a timing when the reception processing is performed on the purchased article. As a result, it is possible to be appropriated as an asset at an appropriate timing corresponding to each of the purchased article and the supplied article.

### Industrial Applicability

The present disclosure can be applied to a production industry or the like that produces a product using a component.

### Reference Signs List

10 Manufacturing company, 12 Warehouse, 14 Factory, 15 Production area, 16 Preparation area, 18 Components management system, 20 Integration management device, 21 CPU, 22 Memory section, 23 Inventory information, 24 Asset information, 25 Production plan information, 26 Communication section, 27 Display section, 28 Input section, 30 Housing device, 31 Gate, 32 Operation panel, 35 Housing control section, 36 CPU, 37 Memory section, 38 Communication section, 40 Mounting system, 43 Printing device, 44 Print inspection device, 45 Mounting device, 46 Mount inspection device, 47 Operation panel, 48 Portable terminal, 50 Mounting control section, 51 CPU, 52 Memory section, 53 Conveyance section, 54 Supply section, 55 Mounting section, 56 Head moving section, 57 Mounting head, 58 Suction nozzle, 59 Communication section, 60 Production management device, 61 CPU, 62 Memory section, 63 Communication section, 67 Display section, 68 Input section, 80 Factory, 90 Shop, F Feeder, M Operator, P Component, R Reel, S Substrate

## Claims

1. A components management system that manages components used in production of a product by a production device, the components management system comprising:
a production management device (60);
an integration management device (20) comprising
a supplied article appropriating section; and
a reception section configured to, in a case where a supplied article supplied from a customer of the product is received as the component, perform reception processing of registering information on a storage location at which the supplied article is stored for each handling unit in association with component information;
wherein
when the supply of the component is started in the production device, production management device notifies integration management device, and
the supplied article appropriating section is configured to appropriate a price of the supplied article as an asset when the supply of component is started.

2. The components management system according to claim 1,
wherein the supplied article appropriating section is configured to appropriate a price of the supplied article as an asset when the supplied article is used in production by the production device and the production is terminated, and
the supplied article appropriating section is configured to count the number of uses of the supplied article used in production by the production device, and
appropriate a price of the supplied article for the counted number of uses as an asset.

3. The components management system according to any one of claims 1 or 2,
wherein the reception section configured to, in a case where a purchased article purchased from a seller is received as the component, perform the reception processing on the purchased article, and
the components management system further comprises a purchased article appropriating section configured to appropriate a price of the purchased article as an asset for each handling unit at a timing when the reception processing is performed on the purchased article.

## Patentansprüche

1. Komponenten-Verwaltungssystem, das bei Produktion eines Produktes durch eine Produktionsvorrichtung eingesetzte Komponenten verwaltet, wobei das Komponenten-Verwaltungssystem umfasst:
eine Produktions-Verwaltungseinrichtung (60);
eine Integrations-Verwaltungseinrichtung (20), die umfasst
einen Abschnitt zum Übernehmen eines zugeführten Artikels; und
einen Annahme-Abschnitt, der so ausgeführt ist, dass er wenn ein zugeführter Artikel von einem Abnehmer des Produktes als die Komponente empfangen wird, Annahme-Verarbeitung, bei der Informationen über einen Lagerort, an dem der zugeführte Artikel gelagert wird, für jede Verarbeitungs-Einheit in Verbindung mit Komponenten-Informationen registriert werden;
wobei
wenn die Zufuhr des Bauteils in der Produktionsvorrichtung in Gang gesetzt wird, die Produktions-Verwaltungseinrichtung die Integrations-Verwaltungseinrichtung benachrichtigt, und
der Abschnitt zum Übernehmen eines zugeführten Artikels so ausgeführt ist, dass er einen Preis des zugeführten Artikels als einen Vermögenswert übernimmt, wenn die Zufuhr der Komponente in Gang gesetzt wird.

2. Komponenten-Verwaltungssystem nach Anspruch 1,
wobei der Abschnitt zum Übernehmen eines zugeführten Artikels so ausgeführt ist, dass er einen Preis des zugeführten Artikels als einen Vermögenswert übernimmt, wenn der zugeführte Artikel bei Produktion durch die Produktionsvorrichtung eingesetzt wird und die Produktion beendet wird, und
der Abschnitt zum Übernehmen eines zugeführten Artikels so ausgeführt ist, dass er zählt, wie häufig der zugeführte Artikel bei Produktion durch die Produktionsvorrichtung eingesetzt wird, und
einen Preis des zugeführten Artikels für die gezählte Anzahl von Einsätzen als einen Vermögenswert übernimmt.

3. Komponenten-Verwaltungssystem nach einem der Ansprüche 1 oder 2,
wobei der Annahme-Abschnitt so ausgeführt ist, dass er wenn ein gekaufter Artikel, der von einem Verkäufer gekauft wird, als das Bauteil angenommen wird, die Annahme-Verarbeitung an dem gekauften Artikel durchführt, und
das Komponenten-Verwaltungssystem des Weiteren einen Abschnitt zum Übernehmen eines gekauften Artikels umfasst, der so ausgeführt ist, dass er einen Preis des gekauften Artikels als einen Vermögenswert für jede Verarbeitungs-Einheit zu einem Zeitpunkt übernimmt, zu dem die Annahme-Verarbeitung an dem gekauften Artikel durchgeführt wird.

## Revendications

1. Système de gestion de composants qui gère les composants qui sont utilisés lors de la production d'un produit par un dispositif de production, le système de gestion de composants comprenant :
un dispositif de gestion de production (60) ; et
un dispositif de gestion d'intégration (20) comprenant :
une section d'affectation d'article fourni ; et
une section de réception configurée pour, dans le cas où un article fourni qui est fourni par un client du produit est reçu en tant que composant, effectuer un traitement de réception consistant à enregistrer une information concernant une localisation de stockage au niveau de laquelle l'article fourni est stocké pour chaque unité opérationnelle en association avec une information de composant ;
dans lequel :
lorsque la fourniture du composant est démarrée dans le dispositif de production, le dispositif de gestion de production en informe le dispositif de gestion d'intégration ; et
la section d'affectation d'article fourni est configurée pour affecter un prix de l'article fourni en tant qu'élément d'actif lorsque la fourniture de composant est démarrée.

2. Système de gestion de composants selon la revendication 1, dans lequel :
la section d'affectation d'article fourni est configurée pour affecter un prix de l'article fourni en tant qu'élément d'actif lorsque l'article fourni est utilisé lors de la production par le dispositif de production et que la production est terminée ; et
la section d'affectation d'article fourni est configurée pour :
compter le nombre d'utilisations de l'article fourni qui est utilisé lors de la production par le dispositif de production ; et pour
affecter un prix de l'article fourni pour le nombre compté d'utilisations en tant qu'élément d'actif.

3. Système de gestion de composants selon l'une quelconque des revendications 1 ou 2, dans lequel :
la section de réception est configurée pour, dans le cas où un article acheté qui est acheté auprès d'un vendeur est reçu en tant que composant, effectuer le traitement de réception sur l'article acheté ; et
le système de gestion de composants comprend en outre une section d'affectation d'article acheté configurée pour affecter un prix de l'article acheté en tant qu'élément d'actif pour chaque unité opérationnelle selon une temporisation selon laquelle le traitement de réception est effectué sur l'article acheté.
